# EUROPEAN PATENT APPLICATION

(11) **EP 3 517 795 A1**
(43) Date of publication of application: **31.07.2019**
(21) Application number: 18176263.4
(22) Date of filing: 06.06.2018
(51) Int. Cl.: F16B 39/282, F16B 41/00, F16B 43/00

(54) **TWO-PIECE ANTI-LOOSENING SCREW ASSEMBLY**

(30) Priority: 30.01.2018 TW 107201465 U
(71) Applicant: Unitech Products Corp., 701 Tainan City (TW)
(72) Inventor: Chang, Zephyr, 701 Tainan City (TW)
(74) Representative: V.O.

(57) **Abstract**

A two-piece anti-loosening screw assembly includes a screw (3) and a washer (4). The screw (3) includes a shank (31), and a head (32) connected to one end of the shank (31) and having a lower surface (35) formed with a cam structure (350). The washer (4) is sleeved on the screw (3), and includes inner and outer peripheral surfaces (41, 42) radially spaced apart from each other, an upper ring surface (43) interconnecting upper peripheries of the inner and outer peripheral surfaces (41, 42) and formed with a cam structure (430) engaging with the cam structure (350) of the lower surface (35) of the head (32), and a lower ring surface (44) interconnecting lower peripheries of the inner and outer peripheral surfaces (41, 42) and formed with a serrated structure (440) configured to bite into a surface of a workpiece (21).

## Description

The disclosure relates to a tool component for positioning a workpiece, more particularly to a two-piece anti-loosening screw assembly that can be threadedly fastened to the workpiece.

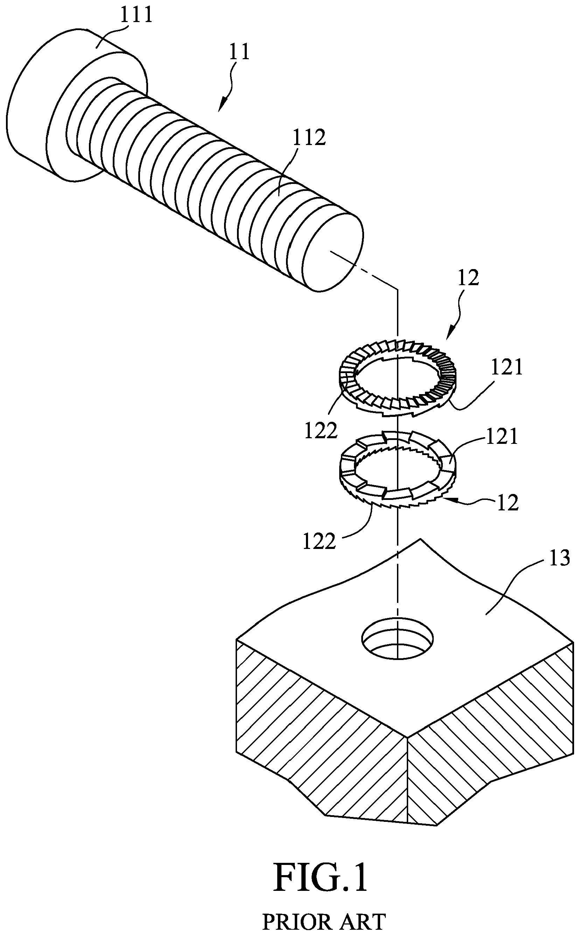

Referring to Figs. 1 to 3, a conventional bolt 11 for used in coordination with two washers 12 includes a head 111, and a shank 112 extending coaxially and outwardly from the head 111 and having a columnar shape. An outer peripheral surface of the shank 112 is formed with threads . Each washer 12 has an annular first surface 121 formed with a cam structure, and an annular second surface 122 opposite to the first surface 121 and formed with a serrated structure.

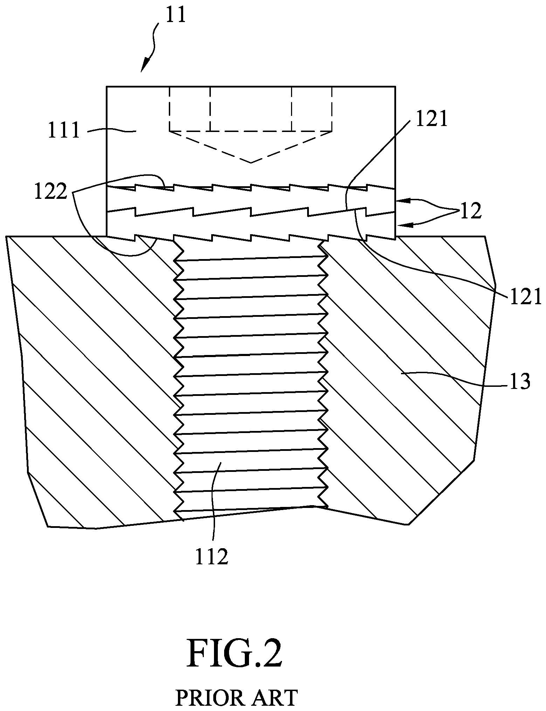

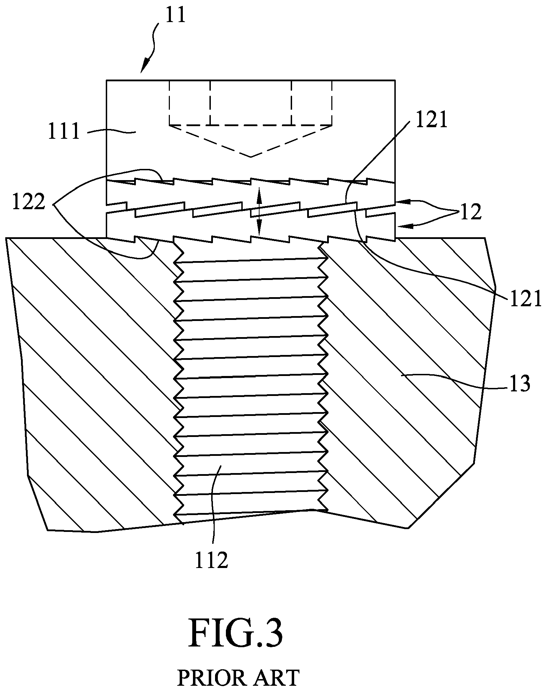

In use, the washers 12 are first sleeved on the shank 112 of the conventional bolt 11 with the first surfaces 121 thereof facing each other, after which the bolt 11 is screwed into a workpiece 13 until the head 111 thereof presses the washers 12 against the workpiece 13. At this time, the washers 12 are engaged with each other through the first surfaces 121 thereof, while the second surfaces 122 thereof respectively bite into surfaces of the head 111 and the workpiece 13, as shown in Fig. 2, so that it is not easy for the washers 12 to rotate relative to the head 111 and the workpiece 13. When the workpiece 13 is operated and generates vibration that drives the bolt 11 to slightly rotate and loosen, the washers 12 are displaced relative to each other, as shown in Fig. 3, and the distance between the head 111 and the workpiece 13 is increased. In addition, the cam structure of the first surface 121 can increase the locking force of the bolt 11 to prevent the bolt 11 from rotating and loosening from the workpiece 13.

Although the conventional bolt 11 in coordination with the washers 12 can achieve its intended purpose during use thereof, it is rather troublesome when the bolts 11 are used in large number, mainly because it is necessary to sleeve two washers 12 on each bolt 11. Further, a large number of the washers 12 is also necessary.

Therefore, an object of the present disclosure is to provide a two-piece anti-loosening screw assembly that is capable of alleviating at least one of the drawbacks of the prior art.

Accordingly, a two-piece anti-loosening screw assembly of this disclosure includes a screw and a washer. The screw includes a shank having a columnar shape and extending along a longitudinal axis, and a head connected to one end of the shank. The shank has an outer peripheral surface that includes a threaded segment. The head has a lower surface facing the shank and formed with a cam structure. The washer is sleeved on the screw, has a ring shape and includes an inner peripheral surface and an outer peripheral surface radially spaced apart from each other, an upper ring surface that interconnects upper peripheries of the inner and outer peripheral surfaces and that is formed with a cam structure engaging with the cam structure of the lower surface of the head, and a lower ring surface that interconnects lower peripheries of the inner and outer peripheral surfaces, that is opposite to the upper ring surface, and that is formed with a serrated structure configured to bite into a surface of a workpiece.

Other features and advantages of the disclosure will become apparent in the following detailed description of the embodiments with reference to the accompanying drawings, of which:
Fig. 1 is a perspective view, illustrating how a conventional bolt is used in coordination with two washers on a workpiece;
Fig. 2 is a fragmentary partly sectional view, illustrating how the conventional bolt, in coordination with the washers, is fastened to the workpiece;
Fig. 3 is a view similar to Fig. 2, but illustrating the washers being displaced relative to each other;
Fig. 4 is a fragmentary partly sectional view, illustrating how a two-piece anti-loosening screw assembly according to the first embodiment of this disclosure is fastened to a workpiece;
Fig. 5 is an exploded perspective view of a screw blank and a washer of the first embodiment;
Fig. 6 is a view similar to Fig. 5, but taken from another angle;
Fig. 7 is a fragmentary side view of a screw of the first embodiment;
Fig. 8 is a schematic side view of the washer of the first embodiment;
Fig. 9 is a view similar to Fig. 4, but illustrating the washer and a head of the screw being displaced relative to each other; and
Fig. 10 is a fragmentary partly sectional view, illustrating how a two-piece anti-loosening screw assembly according to the second embodiment of this disclosure is fastened to the workpiece.

Before the present disclosure is described in greater detail with reference to the accompanying embodiments, it should be noted herein that like elements are denoted by the same reference numerals throughout the disclosure.

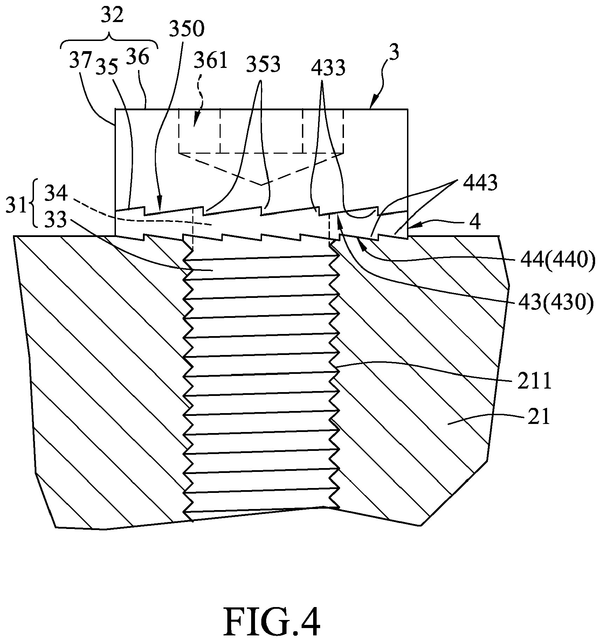

Referring to Figs. 4 to 6, a two-piece anti-loosening screw assembly according to the first embodiment of the present disclosure is configured to be fastened to a workpiece 21 formed with a screw hole 211, and includes a screw 3 and a washer 4 sleeved on the screw 3.

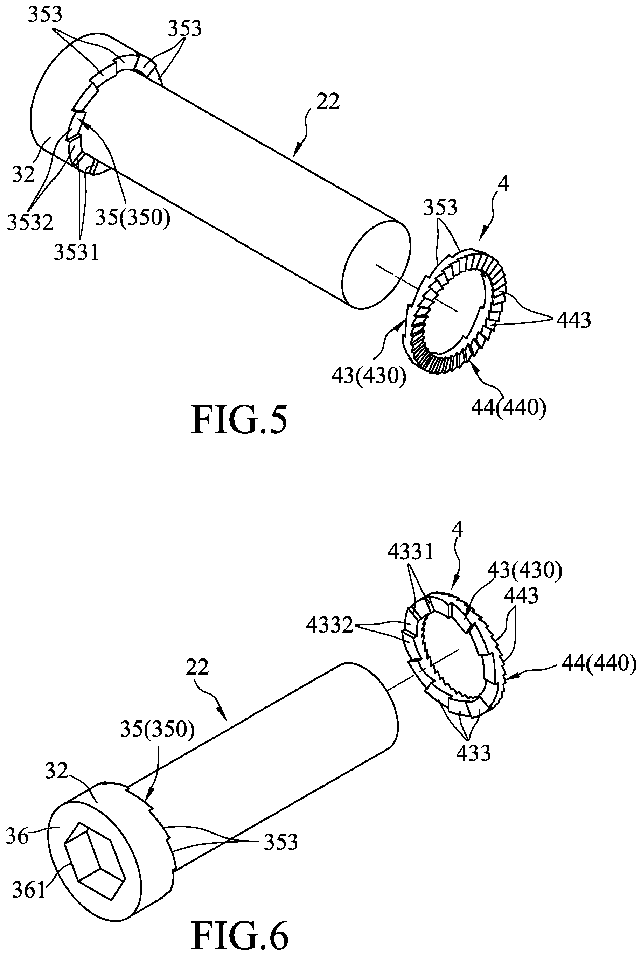

Before proceeding with the detailed description of this embodiment, it should be noted herein that during production of the first embodiment, the washer 4 is first sleeved on a screw blank 22, after which a shank of the screw blank 22 is thread-rolled to form threads on an outer peripheral surface thereof, thereby forming the screw blank 22 into the screw 3 and thereby limiting the washer 4 on the screw 3. Figs. 5 and 6 are exploded perspective views of the screw blank 22 and the washer 4 taken in different angles.

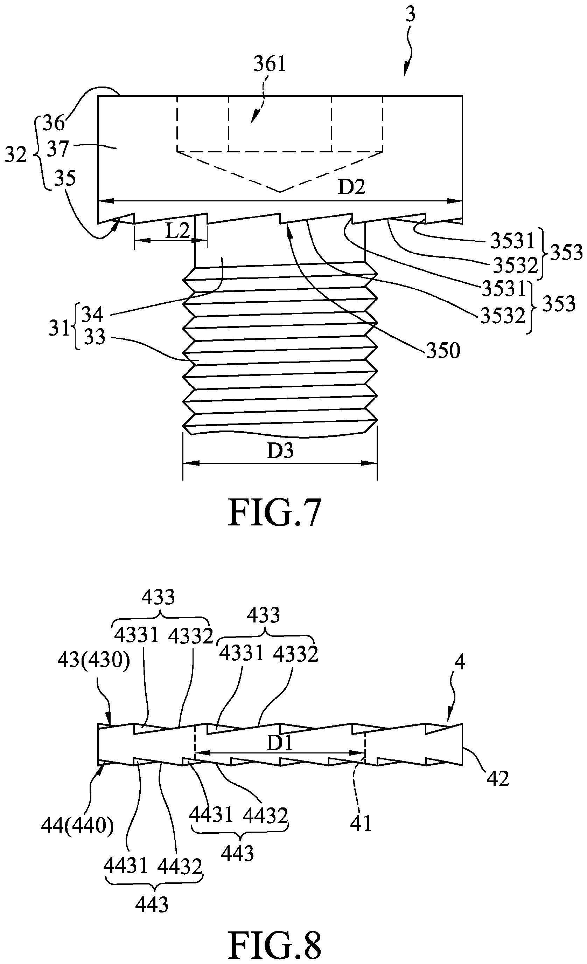

Referring to Figs. 7 and 8, in combination with Fig. 4, the screw 3 includes a shank 31 having a columnar shape and extending along a longitudinal axis, and a head 32 having a circular shape and connected coaxially to one end of the shank 31. The shank 31 has an outer peripheral surface including a threaded segment 33 spaced apart from the head 32, and a non-threaded segment 34 connected between the head 32 and the threaded segment 33. The head 32 has a lower surface 35 facing the shank 31, an upper surface 36 opposite to the lower surface 35 and formed with an insertion groove 361 for insertion of a hand tool therein, and an outer peripheral surface 37 interconnecting outer peripheries of the lower and upper surfaces 35, 36.

The lower surface 35 extends in a circumferential direction surrounding the non-threaded segment 34, and is formed with a cam structure 350. The cam structure 350 includes a plurality of spaced-apart radially extending cams 353 surrounding the non-threaded segment 34. Each cam 353 has an abutment surface 3531 extending axially and outwardly from the lower surface 35, and an inclined surface 3532 that is inclined with respect to the circumferential direction of the lower surface 35 and that interconnects the abutment surfaces 3531 of two adjacent ones of the cams 353. The abutment surface 3531 has a length extending radially and a width extending axially. The inclined surface 3532 has a length extending along the circumferential direction of the lower surface 35 and a width extending radially.

The washer 4 has a ring shape, and includes an inner peripheral surface 41 receiving the non-threaded segment 34, an outer peripheral surface 42 radially spaced apart from the inner peripheral surface 41, an upper ring surface 43 interconnecting upper peripheries of the inner and outer peripheral surfaces 41, 42 and facing the head 32, and a lower ring surface 44 interconnecting lower peripheries of the inner and outer peripheral surfaces 41, 42 and opposite to the upper ring surface 43. The inner peripheral surface 41 has an inner diameter (D1) smaller than an outer diameter (D2) of the head 32 and smaller than an outer diameter (D3) of the threaded segment 33, such that the inner peripheral surface 41 is limited between the head 32 and the non-threaded segment 34.

Each of the upper and lower ring surfaces 43, 44 of the washer 4 extends in a circumferential direction surrounding the shank 31. The upper ring surface 43 is formed with a cam structure 430 engaging with the cam structure 350 of the lower surface 35 of the head 32. The cam structure 430 includes a plurality of spaced-apart radially extending cams 433 each of which has an abutment surface 4331 extending axially and outwardly from the upper ring surface 43, and an inclined surface 4332 that is inclined with respect to the circumferential direction of the upper ring surface 43 and that interconnects the abutment surfaces 4331 of two adjacent ones of the cams 433. The abutment surface 4331 has a length extending radially and a width extending axially. The inclined surface 4332 has a length extending along the circumferential direction of the upper ring surface 43 and a width extending radially.

The lower ring surface 44 is formed with a serrated structure 440. The serrated structure 440 includes a plurality of spaced-apart radially extending serrations 443 each of which has a straight surface 4431 substantially parallel to the longitudinal axis of the shank 31, and an inclined surface 4432 that is inclined with respect to the circumferential direction of the lower ring surface 44 and that interconnects the straight surfaces 4431 of two adjacent ones of the serrations 443. The inclined surface 4432 of each serration 443 is smaller than the inclined surface 4332 of each cam 433. The straight surface 441 has a length extending radially and a width extending axially.

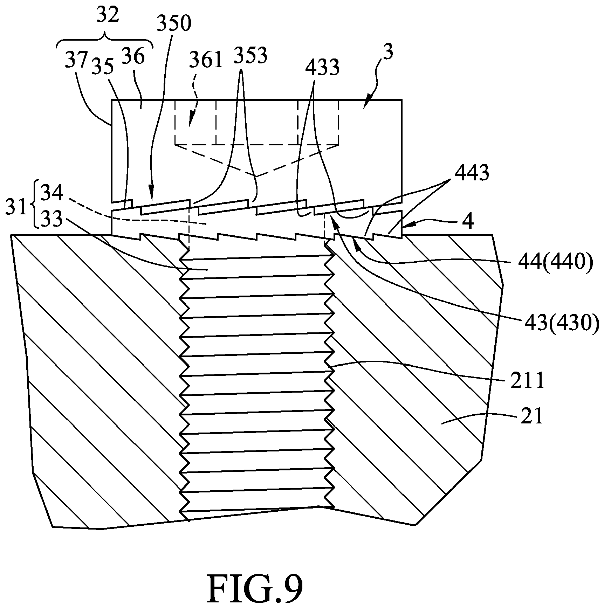

Referring back to Fig. 4, to use the first embodiment, the screw 3 of the screw assembly of this embodiment is directly threaded into the screw hole 211 of the workpiece 21, and there is no need to sleeve the washer 4 on the screw 3 beforehand, so that use of the screw assembly of this embodiment is very convenient. When the screw assembly of this embodiment is tightened, the head 32 and the washer 4 are engaged to each other through the cams 353, 433 thereof, while the serrations 443 of the washer 4 bite into a surface of the workpiece 21, so that the washer 4 is not likely to rotate relative to the workpiece 12. If the screw 3 rotates slightly due to vibration of the workpiece 21, the cams 433 of the washer 4 and the cams 353 of the head 32 are displaced relative to each other, so that a distance between the head 32 and the workpiece 21 is increased, as shown in Fig. 9, and so that the thread of the threaded segment 33 of the shank 31 is pressed tightly against the thread of the screw hole 211 of the workpiece 21, thereby preventing further rotation of the screw 3. A three-dimensional obstruction formed by the relative displacement of the cams 433, 353 of the washer 4 and the head 32 can also prevent continuous rotation of the head 32 relative to the washer 4. Hence, the screw assembly of this embodiment is prevented from continuous rotation relative to the workpiece 21, thereby achieving an anti-loosening effect. In addition, since the lower surface 35 of the head 32 is directly formed with the cams 353 that can engage with the cams 433 of the washer 4, in comparison with the prior art which requires the use of two washers 12 (see Fig. 1), this embodiment also has the advantage of saving the use of the washer 4.

In other alternative embodiments, the head 32 of the screw 3 may be a hexagonal head, a hexwasher head, a hex flange head, a pan head, a round head, a round washer head, a truss head, a button head, a cheese head, etc.

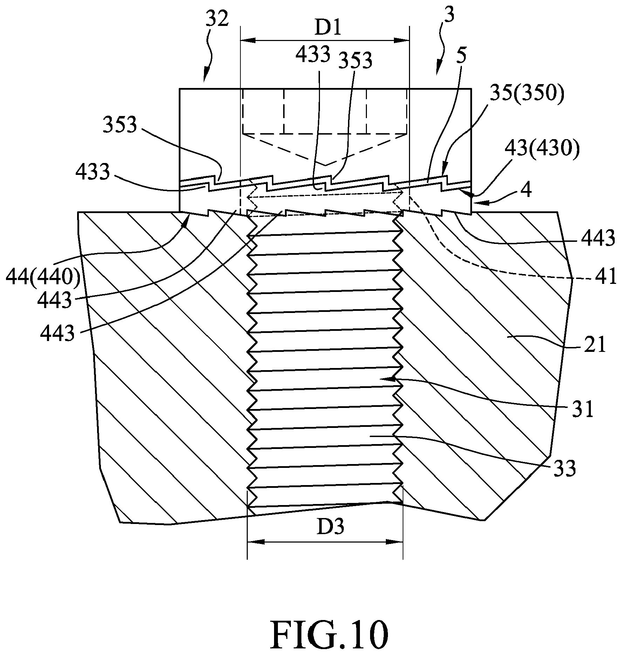

Referring to Fig. 10, the second embodiment of the two-piece anti-loosening screw assembly according to this disclosure is generally identical to the first embodiment, and differs in that, during production of the second embodiment, the shank of the screw blank 22 (see Figs. 5 and 6) is thread-rolled such that the shank 31 of the screw 3 formed from the screw blank 22 has only the threaded segment 33, and the lower surface 35 of the head 32 is directly connected to one end of the threaded segment 33 of the shank 31. Afterwards, the washer 4 is sleeved on the threaded segment 33, and the upper ring surface 43 thereof is adhered to the lower surface 35 of the head 32 through an adhesive 5, thereby fixing the washer 4 to the lower surface 35 of the head 32. In this embodiment, the inner peripheral surface 41 of the washer 4 has an inner diameter (D1) greater than an outer diameter (D3) of the threaded shank 31.

Since the head 32 and the washer 4 of the second embodiment have the cams 353 adhered to each other through the adhesive 5, and since the washer 4 has the serrations 443 for biting into the workpiece 21 during use thereof, the second embodiment can also achieve the anti-loosening effect. Further, the washer 4 is also directly connected to the screw 3 in this embodiment, so that the screw assembly of this embodiment also has the advantage of eliminating the need to sleeve the washer 4 on the screw 3, and is thus convenient to use.

In sum, the advantages of the two-piece anti-loosening screw assembly of this disclosure can be summarized as: because the lower surface 35 of the head 32 and the upper ring surface 43 of the washer 4 are provided with the cam structure 350, 430, while the lower ring surface 44 of the washer 4 is provided with the serrated structure 440, the screw assembly of this disclosure can achieve the anti-loosening effect and can save the use of the washer 4. Further, the washer 4 is limited between the head 32 and the threaded segment 33 in the first embodiment, and is adhered to the head 32 through the adhesive 5 in the second embodiment, so that the screw assembly of this disclosure has the advantage of eliminating the need to sleeve the washer 4 on the screw 3.

In the description above, for the purposes of explanation, numerous specific details have been set forth in order to provide a thorough understanding of the embodiment (s) . It will be apparent, however, to one skilled in the art, that one or more other embodiments may be practiced without some of these specific details . It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A two-piece anti-loosening screw assembly comprising a screw (3) and a washer (4) sleeved on said screw (3), the screw (3) including a shank (31) having a columnar shape and extending along a longitudinal axis, and a head (32) connected to one end of said shank (31), said shank (31) having an outer peripheral surface that includes a threaded segment (33), said washer (4) having a ring shape and including an inner peripheral surface (41) and an outer peripheral surface (42) radially spaced apart from each other, **characterized by**:
said head (32) having a lower surface (35) facing said shank (31) and formed with a cam structure (350) ; and
said washer (4) further including an upper ring surface (43) interconnecting upper peripheries of said inner and outer peripheral surfaces (41, 42) and formed with a cam structure (430) engaging with said cam structure (350) of said lower surface (35) of said head (32), and a lower ring surface (44) that interconnects lower peripheries of said inner and outer peripheral surfaces (41, 42), that is opposite to said upper ring surface (43), and that is formed with a serrated structure (440) configured to bite into a surface of a workpiece (21).

2. The two-piece anti-loosening screw assembly as claimed in Claim 1, wherein each of said lower surface (35) of said head (32) and said upper and lower surfaces (43, 44) of said washer (4) extends in a circumferential direction surrounding said shank (31) .

3. The two-piece anti-loosening screw assembly as claimed in Claim 2, wherein said cam structure (350, 430) of each of said lower surface (35) of said head (32) and said upper ring surface (43) of said washer (4) includes a plurality of spaced-apart radially extending cams (353, 433) each of which has an abutment surface (3531, 4331) extending axially and outwardly from a corresponding one of said lower surface (35) of said head (32) and said upper ring surface (43) of said washer (4), and an inclined surface (3532, 4332) that is inclined with respect to the circumferential direction of the corresponding one of said lower surface (35) of said head (32) and said upper ring surface (43) of said washer (4) and that interconnects said abutment surfaces (3531, 4331) of two adjacent ones of said cams (353, 433), said serrated structure (440) of said lower ring surface (44) of said washer (4) including a plurality of spaced-apart radially extending serrations (443) each of which has a straight surface (4431) substantially parallel to the longitudinal axis of said shank (31), and an inclined surface (4432) that is inclined with respect to the circumferential direction of said lower ring surface (44) of said washer (4) and that interconnects said straight surfaces (4431) of two adjacent ones of said serrations (443), said inclined surface (4432) of each of said serrations (443) being smaller than said inclined surface (4332) of each of said cams (433).

4. The two-piece anti-loosening screw assembly as claimed in Claim 3, wherein said abutment surface (3531, 4331) has a length extending radially and a width extending axially, said inclined surface (3532, 4332) of each of said cams (353, 433) having a length extending along the circumferential direction of the corresponding one of said lower surface (35) of said head (32) and said upper ring surface (43) of said washer (4), and a width extending radially, said straight surface (4431) of each of said serrations (443) having a length extending radially and a width extending axially.

5. The two-piece anti-loosening screw assembly as claimed in Claim 4, wherein said outer peripheral surface of said shank (31) further includes a non-threaded segment (34) connected between said head (32) and said threaded segment (33), said inner peripheral surface (41) of said washer (4) receiving said non-threaded segment (34), and having an inner diameter (D1) smaller than an outer diameter (D2) of said head (32) and smaller than an outer diameter (D3) of said threaded segment (33), such that said inner peripheral surface (41) of said washer (4) is limited between said head (32) and said threaded segment (33) and such that said upper ring surface (43) of said washer (4) is movably engaged with said lower surface (35) of said head (32).

6. The two-piece anti-loosening screw assembly as claimed in Claim 4, wherein said inner peripheral surface (41) of said washer (4) has an inner diameter (D1) greater than an outer diameter (D3) of said threaded segment (33), and said upper ring surface (43) of said washer (4) is adhered to said lower surface (35) of said head (32) through an adhesive (5).
